(19)

Europäisches Patentamt
European Patent Office
Office européen des brevets

(11) **EP 4 468 756 A1**

(12) **EUROPEAN PATENT APPLICATION**
published in accordance with Art. 153(4) EPC

(43) Date of publication:
**27.11.2024  Bulletin 2024/48**

(21) Application number: **22925717.5**

(22) Date of filing: **09.12.2022**

(51) International Patent Classification (IPC):
**H04W 4/70** (2018.01)

(52) Cooperative Patent Classification (CPC):
**H04W 4/70**

(86) International application number:
**PCT/CN2022/137962**

(87) International publication number:
**WO 2023/151366 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.02.2022  CN 202210122306
17.03.2022  CN 202210268005**

(71) Applicant: **Huawei Technologies Co., Ltd.
Shenzhen, Guangdong 518129 (CN)**

(72) Inventors:
• **WU, Yue
  Shenzhen, Guangdong 518129 (CN)**
• **LI, Xueru
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **POWER DETERMINATION METHOD AND EQUIPMENT**

(57)     This application relates to a power determining method and a device. A first terminal device receives first reporting information from a second terminal device through a sidelink, where the first reporting information includes first interference information, and the first interference information indicates adjacent-channel interference generated for the second terminal device when a third terminal device and/or a fourth terminal device send/sends first sidelink information. The first terminal device determines a transmit power of the third terminal device based on the first reporting information. In embodiments of this application, when a transmit power of a sending device is determined, adjacent-channel interference to a receiving device may be considered, so that the determined transmit power is more accurate.

FIG. 3

**Description**

**CROSS-REFERENCE TO RELATED APPLICATIONS**

This application claims priority to Chinese Patent Application No. 202210122306.9, filed with the China National Intellectual Property Administration on February 9, 2022 and entitled "SIDELINK POWER CONTROL METHOD", which is incorporated herein by reference in its entirety; and this application claims priority to Chinese Patent Application No. 202210268005.7, filed with the China National Intellectual Property Administration on March 17, 2022 and entitled "POWER DETERMINING METHOD AND DEVICE", which is incorporated herein by reference in its entirety.

**TECHNICAL FIELD**

This application relates to the field of communication technologies, and in particular, to a power determining method and a device.

**BACKGROUND**

Different from an uplink (uplink, UL) and a downlink (downlink, DL), a sidelink (sidelink, SL) is a new link technology introduced to support direct communication between devices, and is first introduced in a device-to-device (device-to-device, D2D) application scenario. Through the SL, one user equipment (user equipment, UE) can directly communicate with another UE without forwarding performed through a network. However, a currently calculated transmit power of UE may not ensure data transmission quality.

**SUMMARY**

Embodiments of this application provide a power determining method and a device, to improve accuracy of a calculated transmit power of a UE.

According to a first aspect, a power determining method is provided. The method may be performed by a first terminal device, may be performed by another device including a first terminal device, or may be performed by a chip system or another functional module. The chip system or the functional module can implement a function of the first terminal device. The chip system or the functional module is, for example, disposed in the first terminal device. Optionally, the first terminal device is, for example, a terminal device. The method includes: receiving first reporting information from a second terminal device through a sidelink, where the first reporting information includes first interference information, and the first interference information indicates adjacent-channel interference generated, for information receiving by the second terminal device, when a third terminal device and/or a fourth terminal device send/sends first sidelink information; and determining a transmit power of the third terminal device based on the first reporting information.

In this embodiment of this application, the second terminal device may send the first reporting information to the first terminal device. The first interference information included in the first reporting information indicates the adjacent-channel interference to the second terminal device. Therefore, the first terminal device may use the first interference information as a consideration when determining the transmit power of the third terminal device. It can be learned that, in this embodiment of this application, when a transmit power of a sending device is determined, adjacent-channel interference to a receiving device may be considered, to reduce, as much as possible, adjacent-channel interference generated by the sending device for another receiving device when the sending device sends information. In this way, the determined transmit power is more accurate, and is more consistent with a current actual situation. This helps improve data transmission quality and a receiving success rate.

In an optional implementation, the method further includes: determining a transmit power of the fourth terminal device based on the first reporting information. In this embodiment of this application, a central device may determine transmit powers for a plurality of sending devices, and each sending device does not need to determine the transmit power again. The first terminal device is the central device. In this case, in addition to determining the transmit power of the third terminal device, the first terminal device may further determine the transmit power of the fourth terminal device. If there are more sending devices, the first terminal device may also determine the transmit power for each of the more sending devices. If the sending device determines the transmit power, when determining a transmit power of a sending device, the sending device also actually determines a transmit power of another sending device. This is a redundant process for the sending device. However, if the first terminal device determines the transmit power for each sending device, the first terminal device may determine the transmit powers of the plurality of sending devices together. This reduces the redundancy process and helps reduce power consumption of each device.

In an optional implementation, the first interference information includes an adjacent-channel interference power or an adjacent-channel interference coefficient generated, for the information receiving by the second terminal device, when the third terminal device and/or the fourth terminal device send/sends the first sidelink information. The second terminal device may use information about the adjacent-channel interference power as the first interference information. If this manner is used, the first terminal device may further determine the adjacent-channel interference coefficient based on the information about the adjacent-channel interference power. Alternatively, the second terminal device may perform corresponding processing on the adjacent-channel interference power to obtain the adjacent-channel interference coefficient, and then use the adjacent-channel interference coefficient as the first interference information. This reduces steps that need to be performed by the first terminal device.

In an optional implementation, the adjacent-channel interference coefficient is determined based on a transmit power of the first sidelink information and the adjacent-channel interference power. For example, the adjacent-channel interference coefficient is a difference between the adjacent-channel interference power and the transmit power of the first sidelink information, or the adjacent-channel interference coefficient may be a product, a sum, or the like of a constant and a difference between the adjacent-channel interference power and the transmit power of the first sidelink information. A specific calculation manner is not limited.

In an optional implementation, the first sidelink information includes transmit power information of the first sidelink information. If the first sidelink information may include the transmit power information of the first sidelink information, a device (for example, the second terminal device) that receives the first sidelink information can determine the transmit power information of the first sidelink information, to determine the adjacent-channel interference coefficient.

In an optional implementation, the method further includes: determining, based on first resource reservation information, that the third terminal device and the fourth terminal device send information simultaneously, where the first resource reservation information includes resource reservation information of the third terminal device and resource reservation information of the fourth terminal device. For example, if the plurality of sending devices may broadcast respective resource reservation information, the first terminal device can obtain resource reservation information of the plurality of sending devices. The first terminal device can determine, based on the resource reservation information of the sending device, which sending devices send information simultaneously. For the sending devices that send the information simultaneously, the first terminal device may determine transmit powers of the sending devices based on reporting information related to the sending devices.

In an optional implementation, the first reporting information further includes second interference information, and the second interference information indicates self-interference generated, for the information receiving by the second terminal device, when the second terminal device sends second sidelink information. If the second terminal device can serve as a sending device in addition to a receiving device, when the second terminal device sends sidelink information, interference may be generated for the information receiving by the second terminal device. This is referred to as the self-interference. In this case, the second terminal device may further determine the second interference information, so that the interference information determined by the second terminal device is more accurate. This helps make the transmit power determined by the first terminal device more accurate and more consistent with the current actual situation, and helps improve the data transmission quality and the receiving success rate.

In an optional implementation, the second interference information includes a self-interference power or a self-interference coefficient generated, for the information receiving by the second terminal device, when the second terminal device sends the second sidelink information. The second terminal device may use information about the self-interference power as the second interference information. If this manner is used, the first terminal device may further determine the self-interference coefficient based on the information about the self-interference power. Alternatively, the second terminal device may perform corresponding processing on the self-interference power to obtain the self-interference coefficient, and then use the self-interference coefficient as the second interference information. This reduces the steps that need to be performed by the first terminal device.

In an optional implementation, the self-interference coefficient is determined based on a transmit power of the second sidelink information and the self-interference power. For example, the self-interference coefficient is a difference between the self-interference power and the transmit power of the second sidelink information, or the self-interference coefficient may be a product, a sum, or the like of a constant and a difference between the self-interference power and the transmit power of the second sidelink information. A specific calculation manner is not limited.

In an optional implementation, the first reporting information further includes first path loss information, and the first path loss information indicates a path loss between the third terminal device and/or the fourth terminal device and the second terminal device, where the transmit power of the third terminal device is used to send information to the second terminal device. When determining the transmit power of the sending device, the first terminal device may further use the path loss information. Therefore, the second terminal device may report the path loss information together.

In an optional implementation, the first reporting information further includes an SINR threshold of the second terminal device. The SINR threshold of the second terminal device is, for example, an SINR expected by the second terminal device, or a minimum SINR expected by the second terminal device. The receiving device may report the expected SINR, and the first terminal device may adjust an SINR of the receiving device as much as possible by determining the transmit power of the sending device, to increase an SINR of a receiving device with poor channel quality as much as possible, or increase SINRs of receiving devices as a whole.

In an optional implementation, the method further includes: sending transmit power information of the third terminal device to the third terminal device. If the first terminal device is the central device, the first terminal device may notify the third terminal device of the transmit power information of the third terminal device. In addition to the third terminal device, the first terminal device may also notify a corresponding sending device of another determined transmit power.

In an optional implementation, the first terminal device and one of the second terminal device, the third terminal device, or the fourth terminal device are a same terminal device; or the first terminal device, the second terminal device, the third terminal device, and the fourth terminal device are different devices. The first terminal device may be a sending device that sends sidelink information to another terminal device. For example, the first terminal device and the third terminal device or the fourth terminal device are a same terminal device, or the first terminal device may be a sending device other than the third terminal device and the fourth terminal device. Alternatively, the first terminal device may be a receiving device configured to receive sidelink information from another terminal device. For example, the first terminal device and the second terminal device are a same terminal device, or the first terminal device may be a terminal device other than the second terminal device. Alternatively, the first terminal device may not serve as a sending device or a receiving device. For example, the first terminal device serves as the central device or a control device, and is configured to manage the another terminal device. In this case, the first terminal device, a terminal device (for example, the third terminal device and the fourth terminal device) serving as a sending device, and a terminal device (for example, the second terminal device) serving as a receiving device are different devices.

According to a second aspect, another power determining method is provided. The method may be performed by a second terminal device, may be performed by another device including a second terminal device, or may be performed by a chip system or another functional module. The chip system or the functional module can implement a function of the second terminal device. The chip system or the functional module is, for example, disposed in the second terminal device. Optionally, the second terminal device is, for example, a terminal device. The method includes: determining first interference information, where the first interference information indicates adjacent-channel interference generated, for information receiving by the second terminal device, when a third terminal device and/or a fourth terminal device send/sends first sidelink information; and sending first reporting information through a sidelink, where the first reporting information includes the first interference information, and the first reporting information is used to determine a transmit power of one or more sending devices.

In an optional implementation, the first interference information includes an adjacent-channel interference power or an adjacent-channel interference coefficient generated, for the information receiving by the second terminal device, when the third terminal device and/or the fourth terminal device send/sends the first sidelink information.

In an optional implementation, the adjacent-channel interference coefficient is determined based on a transmit power of the first sidelink information and the adjacent-channel interference power.

In an optional implementation, the method further includes: measuring the first sidelink information from a first subband on a first resource, to obtain the adjacent-channel interference power, where the first subband is a subband on which the third terminal device and/or the fourth terminal device send/sends the first sidelink information.

In an optional implementation, the first subband includes an adjacent subband of an operating subband of the second terminal device, and/or includes a subband that is not used to perform information transmission with an operating subband of the second terminal device.

In an optional implementation, the first sidelink information includes transmit power information of the first sidelink information.

In an optional implementation, the first reporting information further includes second interference information, and the second interference information indicates self-interference generated, for the information receiving by the second terminal device, when the second terminal device sends second sidelink information.

In an optional implementation, the second interference information includes a self-interference power or a self-interference coefficient generated, for the information receiving by the second terminal device, when the second terminal device sends the second sidelink information.

In an optional implementation, the self-interference coefficient is determined based on a transmit power of the second sidelink information and the self-interference power.

In an optional implementation, the method further includes: measuring the second sidelink information from a second subband on the first resource, to obtain the self-interference power, where the second subband is a subband on which the second terminal device sends the second sidelink information.

In an optional implementation, the second subband includes an adjacent subband of the operating subband of the second terminal device, and/or includes a subband that is not used to perform information transmission with the operating subband of the second terminal device.

In an optional implementation, the method further includes: receiving configuration information, where the configuration information is used to configure the first resource, and the first resource is used to measure interference from another subband to the operating subband of the second terminal device.

In an optional implementation, the first reporting information further includes first path loss information, the first path loss information indicates a path loss between the third terminal device and/or the fourth terminal device and the second terminal device, where a transmit power of the third terminal device is used to send information to the second terminal device.

In an optional implementation, the first reporting information further includes an SINR threshold of the second terminal device.

For technical effects of the second aspect or the implementations, refer to the descriptions of the technical effects of the first aspect or the corresponding implementations.

According to a third aspect, a communication apparatus is provided. The communication apparatus may be the first terminal device in the first aspect and/or the second aspect. The communication apparatus has a function of the foregoing first terminal device. The communication apparatus is, for example, the first terminal device, or a functional module in the first terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

For example, the transceiver unit (or the receiving unit) is configured to receive first reporting information from a second terminal device through a sidelink, where the first reporting information includes first interference information, and the first interference information indicates adjacent-channel interference generated, for information receiving by the second terminal device, when a third terminal device and/or a fourth terminal device send/sends first sidelink information. The processing unit is configured to determine a transmit power of the third terminal device based on the first reporting information.

In an optional implementation, the communication apparatus further includes a storage unit (also referred to as a storage module sometimes), and the processing unit is configured to: be coupled to the storage unit, and execute a program or instructions in the storage unit, to enable the communication apparatus to perform the function of the first terminal device in the first aspect and/or the second aspect.

According to a fourth aspect, a communication apparatus is provided. The communication apparatus may be the second terminal device in the first aspect and/or the second aspect. The communication apparatus has a function of the foregoing second terminal device. The communication apparatus is, for example, the second terminal device, or a functional module in the second terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions in the third aspect.

For example, the processing unit is configured to determine first interference information, where the first interference information indicates adjacent-channel interference generated, for information receiving by the second terminal device, when a third terminal device and/or a fourth terminal device send/sends first sidelink information. The transceiver unit (or the sending unit) is configured to send first reporting information through a sidelink, where the first reporting information includes the first interference information, and the first reporting information is used to determine a transmit power of one or more sending devices.

In an optional implementation, the communication apparatus further includes a storage unit (also referred to as a storage module sometimes), and the processing unit is configured to: be coupled to the storage unit, and execute a program or instructions in the storage unit, to enable the communication apparatus to perform the function of the second terminal device in the first aspect and/or the second aspect.

According to a fifth aspect, a communication system is provided. The communication system includes the communication apparatus in the third aspect and the communication apparatus in the fourth aspect.

According to a sixth aspect, a computer-readable storage medium is provided. The computer-readable storage medium is configured to store a computer program or instructions. When the computer program or the instructions are run, the method performed by the first terminal device or the second terminal device in the foregoing aspects is implemented.

According to a seventh aspect, a computer program product including instructions is provided. When the computer program product runs on a computer, the method in the foregoing aspects is implemented.

According to an eighth aspect, a chip system is provided. The chip system includes a processor and an interface.

The processor is configured to: invoke instructions from the interface, and run the instructions, so that the chip system implements the method in the foregoing aspects.

## BRIEF DESCRIPTION OF DRAWINGS

FIG. 1 is a diagram of applying a subband non-overlapping full-duplex technology to a Uu interface;
FIG. 2A and FIG. 2B are diagrams of two application scenarios according to an embodiment of this application;
FIG. 3 is a flowchart of a power determining method according to an embodiment of this application;
FIG. 4 is a diagram of a configured first resource according to an embodiment of this application;
FIG. 5 is a diagram of an apparatus according to an embodiment of this application; and
FIG. 6 is a diagram of another apparatus according to an embodiment of this application.

## DESCRIPTION OF EMBODIMENTS

To make objectives, technical solutions, and advantages of embodiments of this application clearer, the following further describes embodiments of this application in detail with reference to accompanying drawings.

The following describes some terms or concepts in embodiments of this application, to facilitate understanding by a person skilled in the art.

Embodiments of this application relate to a sending device and a receiving device. For example, both the sending device and the receiving device are terminal devices. The terminal device is a device with a wireless transceiver function, and may be a fixed device, a mobile device, a handheld device (for example, a mobile phone), a wearable device, an in-vehicle device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D), vehicle-to-everything (vehicle-to-everything, V2X), machine-to-machine/machine type communication (machine-to-machine/machine type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, a smart wearable, smart transportation, a smart city (smart city), an unmanned aerial vehicle, and a robot. The terminal device may be sometimes referred to as a UE, a terminal, an access station, a UE station, a remote station, a wireless communication device, a user apparatus, or the like. For ease of description, in embodiments of this application, the UE is used as an example of the terminal device for description. For example, the first UE in the following may be replaced with a first terminal device, the second UE in the following may be replaced with a second terminal device, the third UE in the following may be replaced with a third terminal device, and the fourth UE in the following may be replaced with a fourth terminal device.

A network device in embodiments of this application may include, for example, an access network device and/or a core network device. The access network device is a device with a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), a base station evolved after the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, a network device in a vehicle-to-everything (vehicle-to-everything, V2X) technology may be a road side unit (road side unit, RSU). The following uses an example in which the access network device is a base station for description. The base station may communicate with the terminal device, or may communicate with the terminal device via the relay station. The terminal device may communicate with the plurality of base stations in the different access technologies. The core network device is configured to implement functions such as mobility management, data processing, session management, and policy and charging. Names of devices that implement core network functions in systems of the different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing this function. The apparatus may be installed in the network device. In the technical solutions provided in embodiments of this application, an example in which the apparatus configured to implement the function of the network device is the network device is used for describing the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, first interference information and second interference information may be same interference information, or may be different interference information. In addition, this name does not indicate that content, information amounts, priorities, importance degrees, or the like of the two pieces of interference information are different. In addition, step numbers in embodiments described in this application are merely used to distinguish between different steps, but are not used to limit a sequence of the steps. For example, step S301 may be performed before step S302, may be performed after step S302, or may be performed simultaneously with step S302.

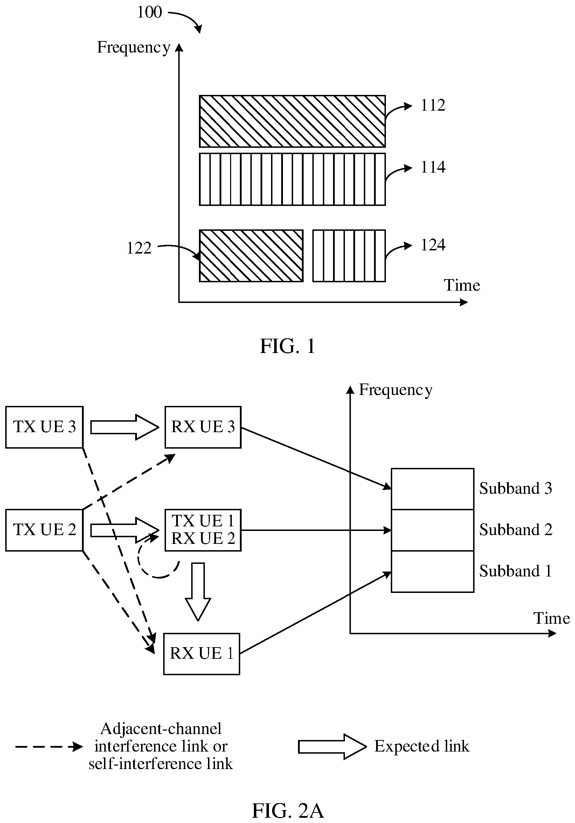

First, a subband non-overlapping full-duplex technology is described. In an LTE system, a communication interface between a UE and a network device may be referred to as a Uu interface. In the Uu interface, the subband non-overlapping full-duplex technology allows flexible configuration of time-frequency resources of an uplink and a downlink within communication bandwidth. For example, the network device may configure more uplink transmission slots, so that uplink coverage of a network can be improved. In addition, a base station may configure that both an uplink subband and a downlink subband exist simultaneously, to reduce a delay of hybrid automatic repeat request (hybrid automatic repeat request, HARQ) feedback. FIG. 1 shows a scenario of applying subband non-overlapping full-duplex 100 to a Uu interface. The subband non-overlapping full-duplex is more flexible in time-frequency resource allocation. As shown in FIG. 1, at the same time, there may be two different subbands that do not overlap in frequency domain. For example, 112 indicates an uplink time-frequency resource, and 114 indicates a downlink time-frequency resource. Alternatively, as shown in FIG. 1, on a same subband, there may be two time periods that do not overlap in time domain. For example, 122 indicates an uplink time-frequency resource, and 124 indicates a downlink time-frequency resource.

Alternatively, the subband non-overlapping full-duplex technology may be used for communication on a sidelink between two terminal devices. In this case, an uplink and a downlink of the subband full-duplex technology on the Uu interface respectively correspond to a transmit link and a receive link of a terminal device in sidelink communication. A terminal device to which the subband non-overlapping full-duplex technology is applied may flexibly configure time-frequency resources of the transmit link and the receive link. In other words, at the same time, there may be two different subbands that do not overlap in frequency domain, for example, a time-frequency resource of a transmit link of a subband non-overlapping full-duplex device exists on one subband and a time-frequency resource of a receive link of a subband non-overlapping full-duplex device exists on another subband. Alternatively, on a same subband, there may be two time periods that do not overlap in time domain, for example, a time-frequency resource of a transmit link of a subband non-overlapping full-duplex device exists in one time period and a time-frequency resource of a receive link of a subband non-overlapping full-duplex device exists in another time period.

The following describes a current power calculation manner when the UE sends information on the SL. For example, if there is no network coverage and unicast is used, a power for a transmitting UE (transmitting user equipment, TX UE) to send a physical sidelink shared channel (physical sidelink shared channel, PSSCH) may be calculated in the following manner:

$$P_{\text{PSSCH}} \; = \; \min\left(P_{\text{CMAX}}, P_{\text{MAX,CBR}}, P_{\text{PSSCH,SL}}\right) \; [\text{dBm}] \quad (\text{formula } 1)$$

$P_{\text{PSSCH}}$ indicates a power for the TX UE to send the PSSCH. $P_{\text{CMAX}}$ indicates a maximum output power of the TX UE. $P_{\text{MAX,CBR}}$ is determined based on a value of *sl-MaxTxPower* configured based on a priority of PSSCH transmission and a channel busy ratio (channel busy ratio, CBR). When *sl-MaxTxPower* is not provided, $P_{\text{MAX,CBR}} = P_{\text{CMAX}}$, and *sl-*

*MaxTxPower* indicates a sidelink maximum transmit power. $P_{\text{PSSCH,SL}} = P_{\text{O,SL}} +$

$$10\log_{10}\left(2^{\mu} \cdot M_{\text{RB}}^{\text{PSSCH}}\right) + \alpha_{\text{SL}} \cdot PL_{\text{SL}} \ [\text{dBm}]$$ . $M_{\text{RB}}^{\text{PSSCH}}$ indicates a quantity of resource blocks (resource blocks, RBs) occupied by the PSSCH transmission. $\mu$ indicates a subcarrier spacing (subcarrier spacing, SCS) configuration. $P_{\text{O,SL}}$ indicates a value of *sl-P0-PSSCH-PSCCH*, where *sl-P0-PSSCH-PSCCH* is a parameter configured by a higher layer. $\alpha_{\text{SL}}$ indicates a value of an *sl-Alpha-PSSCH-physical* sidelink control channel (*physical sidelink control channel, PSCCH*), where when the value of *sl-Alpha-PSSCH-PSCCH* is not provided, $\alpha_{\text{SL}} = 1$, and *sl-Alpha-PSSCH-PSCCH* is a parameter configured by the higher layer. $PL_{\text{SL}} = referenceSignalPower - higher\ layer\ filter\ RSRP$ . $PL_{\text{SL}}$ indicates a path loss between the TX UE and an RX UE. *referenceSignalPower* indicates a transmit power of a demodulation reference signal (demodulation reference signal, DMRS) of a PSSCH sent by the TX UE. *higher layer filter RSRP* indicates a reference signal received power (reference signal received power, RSRP) obtained by the receiving UE (receiving user equipment, RX UE) by measuring the DMRS of the PSSCH sent by the TX UE. The RX UE feeds back the measured RSRP to the TX UE.

It can be learned from the foregoing descriptions that, currently, when the power for sending the PSSCH by the TX UE is calculated, only the path loss from the TX UE to the target RX UE is considered. However, actually, a sending process of the TX UE, in other words, a receiving process of the RX UE, may further be affected by more factors, and a current calculation manner is not considered. In this case, if the transmit power of the TX UE is calculated in the current calculation manner, a calculation result is inaccurate.

In view of this, the technical solutions in embodiments of this application are provided. In embodiments of this application, a second terminal device may send first reporting information to a first terminal device. First interference information included in the first reporting information indicates adjacent-channel interference to the second terminal device. Therefore, the first terminal device may use the first interference information as a consideration when determining a transmit power of a third terminal device. It can be learned that, in embodiments of this application, when a transmit power of a sending device is determined, adjacent-channel interference to a receiving device may be considered. For example, the transmit power of the sending device may be correspondingly increased accordingly, to offset impact of the adjacent-channel interference on the receiving device. In this way, the determined transmit power is more accurate and more consistent with a current actual situation. This helps improve data transmission quality and a receiving success rate.

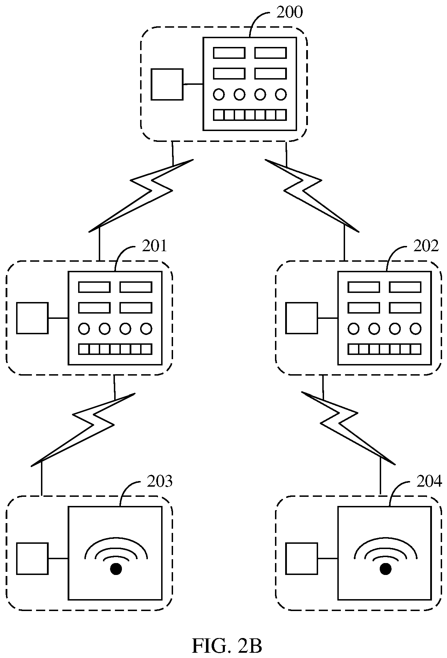

The technical solutions provided in embodiments of this application may be applied to a D2D scenario, for example, a new radio (new radio, NR)-D2D scenario, or may be applied to a vehicle-to-everything (vehicle-to-everything, V2X) scenario, for example, an NR-V2X scenario. For example, the technical solutions provided in embodiments of this application may be applied to an internet of vehicles, for example, V2X or vehicle-to-vehicle (vehicle-to-vehicle, V2V), or may be applied to fields such as intelligent driving, assisted driving, or an intelligent connected vehicle. The following describes two optional application scenarios of embodiments of this application based on FIG. 2A and FIG. 2B.

FIG. 2A is a diagram of an application scenario according to an embodiment of this application. FIG. 2A includes a TX UE 1, a TX UE 2, and a TX UE 3, and includes an RX UE 1, an RX UE 2, and an RX UE 3. Considering that a UE may alternatively apply a subband non-overlapping full-duplex technology, in FIG. 2A, the TX UE 1 and the RX UE 2 are a same UE, in other words, the UE may send sidelink information, and may also receive sidelink information. In the subband non-overlapping full-duplex technology, the UE may send sidelink information on some subbands, and may receive sidelink information on some other subbands simultaneously. In other words, a receive link and a transmit link are allowed to exist simultaneously. In this way, data transmission efficiency of the UE can be improved.

In FIG. 2A, for example, the TX UE 1 is a transmitting end of the RX UE 1, and the TX UE 1 sends sidelink information to the RX UE 1 on a subband 1. The TX UE 2 is a transmitting end of the RX UE 2, and the TX UE 2 sends sidelink information to the RX UE 2 on a subband 2. The TX UE 3 is a transmitting end of the RX UE 3, and the TX UE 3 sends sidelink information to the RX UE 3 on a subband 3. In FIG. 2A, several dashed lines are further drawn to indicate adjacent-channel interference. For example, when the TX UE 3 sends the sidelink information to the RX UE 3, adjacent-channel interference may be generated for receiving by the RX UE 1. When the TX UE 2 sends the sidelink information to the RX UE 2, adjacent-channel interference may be generated for receiving by the RX UE 1, or adjacent-channel interference may be generated for receiving by the RX UE 3. In addition, when the TX UE 1 sends the sidelink information to the RX UE 1, adjacent-channel interference may be generated for receiving by the RX UE 2. Because the TX UE 1 and the RX UE 2 are the same UE, in this case, the adjacent-channel interference is also considered as self-interference. An expected link in FIG. 2A is a link used by a TX UE to send information to an RX UE, and the TX UE is a transmitting end of the RX UE.

FIG. 2B is a diagram of another application scenario according to an embodiment of this application. FIG. 2B shows communication between a primary programmable logic controller (programmable logic controller, PLC), a secondary PLC, and a secondary device of the secondary PLC that comply with an industrial automation protocol. The secondary device of the secondary PLC is, for example, a valve island or a sensor. The communication may occur between the primary PLC and the secondary PLC, and between the secondary PLC and the secondary device of the secondary PLC. Generally, it is assumed that no communication exists between secondary devices of the secondary PLC. At a same moment, the primary PLC may need to receive information from a secondary PLC, and send information to another secondary PLC. At a same moment, a secondary PLC may need to receive information from the primary PLC, and send information to a secondary device of the secondary PLC. In this scenario, the communication between the primary PLC, the secondary PLC, and the secondary device is dominated by periodic traffic, and also includes aperiodic traffic such as an alert or a firmware upgrade.

FIG. 2B includes a primary PLC 200, a secondary PLC 201, a secondary PLC 202, a secondary device 203 of the secondary PLC 201, and a secondary device 204 of the secondary PLC 202. In FIG. 2B, a block connected to each device indicates a transceiver. In other words, for the primary PLC, the secondary PLC, and the secondary device, no built-in transceiver may be used, but the primary PLC, the secondary PLC, and the secondary device are connected to the transceiver. Alternatively, the transceiver may be disposed inside these devices. This is not specifically limited. For FIG. 2B, the primary PLC 200 may serve as a TX UE, for example, as a TX UE 1. The secondary PLC may serve as a TX UE (which may send information to the primary PLC 200, or may send information to the secondary device connected to the secondary PLC). In addition, the secondary PLC may alternatively serve as an RX UE (which may receive information from the primary PLC 200, or may receive information from the secondary device connected to the secondary PLC). The secondary device may serve as a TX UE, and may send information to the secondary PLC connected to the secondary device. In addition, the secondary device may alternatively serve as an RX UE, and may receive information from the secondary PLC connected to the secondary device.

To better describe embodiments of this application, the following describes a method provided in embodiments of this application with reference to the accompanying drawings. In the accompanying drawings corresponding to embodiments of this application, all optional steps are represented by dashed lines. The method provided in embodiments of this application may be applied to the scenario shown in FIG. 2A or FIG. 2B. For example, the third UE in embodiments of this application may be any UE that can serve as a TX UE in FIG. 2A or FIG. 2B, the fourth UE in embodiments of this application may be any UE that can serve as a TX UE in FIG. 2A or FIG. 2B except the third UE, the second UE in embodiments of this application may be any UE that can serve as an RX UE in FIG. 2A or FIG. 2B, and the first UE in embodiments of this application may be any UE in FIG. 2A or FIG. 2B, or may be another UE that is not drawn in FIG. 2A or FIG. 2B.

Because embodiments of this application relate to numbers of TX UEs and RX UEs, a numbering principle is first described.

Numbers of TX UEs and RX UEs at the same time may be determined based on a communication link between the TX UEs and the RX UEs. For example, during numbering, the TX UE may be used as a reference for the numbering, or the RX UE may be used as a reference for the numbering. An example in which the RX UE is used as the reference for the numbering is used. For example, there are three TX UEs and two RX UEs. Two TX UEs of the three TX UEs are transmitting ends of one of the RX UEs, and a TX UE of the other RX UE of the two RX UEs is one remaining UE of the three TX UEs. Therefore, for the RX UE corresponding to the two transmitting ends, there are two communication links between the RX UE and the two transmitting ends. The two communication links may be respectively numbered 1 and 2. A communication link 1 corresponds to one TX UE and the RX UE. In this case, the TX UE may be numbered 1, and the RX UE may be numbered 1. A communication link 2 corresponds to another TX UE and the RX UE. In this case, the TX UE may be numbered 2, and the RX UE may be numbered 2. In addition, for an RX UE corresponding to one transmitting end, there is a communication link between the RX UE and the transmitting end, and the communication link may be numbered 3. In this case, a TX UE corresponding to the communication link is numbered 3, and the RX UE is numbered 3. In other words, the RX UE 1 to the RX UE 3 are obtained through final numbering, but actually there are only two RX UEs, where the RX UE 1 and the RX UE 2 are actually a same RX UE, and different numbers may be set for the same RX UE only when the RX UE 1 and the RX UE 2 correspond to different communication links.

Alternatively, if the TX UE is used as the reference for the numbering. A same TX UE may have different numbers when TX UEs correspond to different communication links.

In addition, some UEs may serve as both TX UEs on a communication link and RX UEs on another communication link. For example, a UE that supports a subband non-overlapping full-duplex technology may serve as both a TX UE and an RX UE at the same time. Therefore, in the following descriptions, if a UE is described as a TX UE, it may indicate that the UE serves as a TX UE on one or more communication links. Alternatively, the UE may serve as an RX UE on another communication link, or the UE may not serve as an RX UE. Similarly, if a UE is described as an RX UE, it may indicate that the UE serves as an RX UE on one or more communication links. Alternatively, the UE may serve as a TX UE on another communication link, or the UE may not serve as a TX UE. The UE that may serve as both the TX UE and the RX UE may be numbered as a TX UE $i$ or an RX UE $j$, where $i$ is not equal to $j$.

In conclusion, in embodiments of this application, a receiving end of the TX UE $i$ is an RX UE $i$. Similarly, a transmitting end of the RX UE $i$ is the TX UE $i$. For the TX UE $i$ and the RX UE $j$, it is considered that the TX UE $i$ is not a transmitting end of the RX UE $j$.

It should be noted that names in embodiments of this application, for example, a "TX UE" and an "RX UE", may be considered as corresponding to information transmission directions. For example, if a UE serves as a transmitting end to send information to another UE, the UE may be referred to as a "TX LTE"; or if a LTE serves as a receiving end to receive information from a transmitting end, the UE may be referred to as an "RX UE".

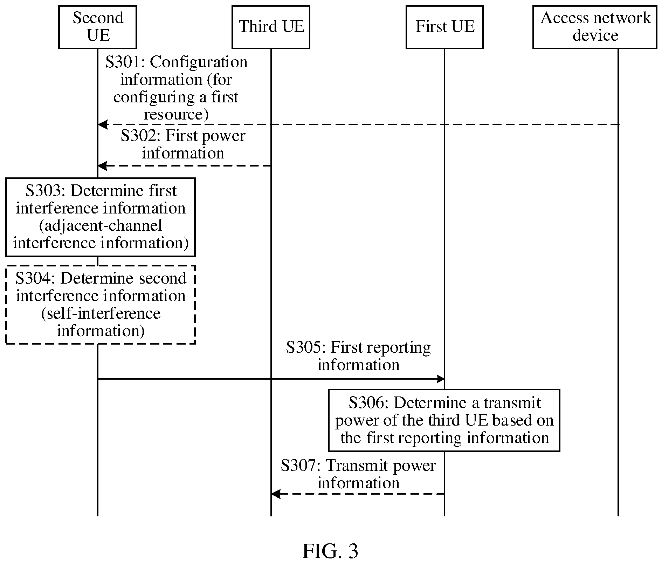

An embodiment of this application provides a power determining method. FIG. 3 is a flowchart of the method.

S301: An access network device sends configuration information. Correspondingly, a second UE receives the configuration information.

The access network device may configure, for one or more UEs, a first resource used for interference measurement, where the UEs may include an RX UE and/or a TX UE. In S301, an example in which the access network device configures the first resource for the second UE is used, and the second UE is, for example, an RX UE. Optionally, the configuration information may be provided by the access network device when the access network device configures an SL resource pool for the UE. For example, the configuration information is included in a message used to configure the SL resource pool for the UE, or the configuration information is sent together with a message used to configure the SL resource pool for the UE. Alternatively, the configuration information may be included in another message, in other words, the configuration information may not be provided when the SL resource pool is configured for the UE, but may be provided in another case.

Alternatively, S301 may be replaced with the following: A TX UE sends the configuration information. In other words, the configuration information may alternatively be configured by the TX UE, and the TX UE is a transmitting end that is to send sidelink information to the second UE. Alternatively, it is understood as that, in this embodiment of this application, a transmit power of the TX UE needs to be determined. If a TX UE is a transmitting end of an RX UE, the transmit power determined for the TX UE is used to send information to the RX UE. For example, if a third UE is a TX UE, and the third UE is a transmitting end of the second UE, a finally determined transmit power of the third UE may be used to send information to the second UE. For the second UE, there may be only one transmitting end. In this case, the TX UE is, for example, the transmitting end, and the transmitting end is, for example, the third UE. Alternatively, for the second UE, if there may be a plurality of transmitting ends, the TX UE is, for example, one of the plurality of transmitting ends, and the TX UE is, for example, the third UE.

The configuration information may be used to configure the first resource. For example, the configuration information includes a location of a time domain symbol occupied by the first resource in one slot (slot), and/or includes a quantity and locations of resource elements (resource elements, REs) occupied by the first resource in frequency domain. For example, the first resource is located on an operating subband of the second UE, in other words, a frequency domain resource included in the first resource belongs to an operating subband of the second UE. An operating subband of an RX UE may also be referred to as an expected receive subband of the RX UE, for example, includes a subband on which a transmitting end of the RX UE sends information to the RX UE. The first resource may be used to measure interference from another subband to the operating subband of the second UE. It may be understood as that when the second UE receives sidelink information on the operating subband of the second UE, the second UE may measure sidelink information from the another subband (in other words, sidelink information leaked from the another subband to the operating subband) on the first resource, to determine interference generated by a sending behavior on the another subband for a receiving behavior on the operating subband of the UE. The first resource is a resource used by a corresponding RX UE to perform measurement. Therefore, if the access network device further configures the first resource for the TX UE, the TX UE (for example, the third UE) for which the first resource is configured may not send information on the first resource. For example, a PSCCH, a PSSCH, a DMRS, and the like are not sent. Optionally, the first resource is, for example, a channel state information-interference measurement (channel state information-interference measurement, CSI-IM) resource, or may be another resource.

For example, the second UE measures an adjacent subband of the operating subband of the second UE on the first resource, so that the interference generated by the another subband for the operating subband can be determined. One UE measures one subband, or one UE measures sidelink information from one subband, and an actual measurement object is, for example, a receive power. For example, that the second UE measures the adjacent subband of the operating subband of the second UE on the first resource, or that the second UE measures sidelink information from a subband (the subband is, for example, the adjacent subband of the operating subband of the second UE) on the first resource may be understood as that the second UE measures, on the first resource, an interference power that is leaked to the operating subband and that is sent by a signal on the adjacent subband.

The first resource may be configured for the operating subband of the second UE. For example, the second UE may have one or more operating subbands, and the first resource may correspond to all or some of the operating subbands. For an operating subband, there may be a frequency domain start location and a frequency domain end location. In this case, there may be an adjacent subband for the frequency domain start location, and there may also be an adjacent subband for the frequency domain end location. It may be considered that one operating subband may correspond to two adjacent subbands. Therefore, the first resource configured for one of all or some of the operating subbands may include at least one sub-resource, and the at least one sub-resource may be used to measure the adjacent subband of the operating subband. For example, one sub-resource in the at least one sub-resource may correspond to some adjacent subbands of the operating subband. Optionally, the at least one sub-resource is one sub-resource or two sub-resources. For example, two sub-resources are configured for an operating subband. A frequency domain location of a sub-resource 1 is closer to a frequency domain location of an adjacent subband 1 of the operating subband, and a frequency domain location of a sub-resource 2 is closer to a frequency domain location of an adjacent subband 2 of the operating subband. In this case, it is considered that the sub-resource 1 corresponds to the adjacent subband 1, and the sub-resource 2 corresponds to the adjacent subband 2. In this embodiment of this application, that the first resource corresponds to the one operating subband means that a frequency domain location of the first resource is located on the operating subband. That the one sub-resource corresponds to the some adjacent subbands means that the second UE may measure information on the some adjacent subbands on the sub-resource.

An adjacent subband of an operating subband is, for example, an adjacent subband of the operating subband in frequency domain, in other words, there is no other subband between the adjacent subband and the operating subband. Alternatively, an adjacent subband of an operating subband may not be adjacent to the operating subband in frequency domain. However, if information transmission is performed in none of subbands between a subband A and the operating subband, the subband A may alternatively be considered as the adjacent subband of the operating subband. Therefore, that the at least one sub-resource is used to measure the adjacent subband of the operating subband of the second UE may be understood as that the at least one sub-resource may be used to measure the adjacent subband of the operating subband of the second UE in frequency domain, and/or may be used to measure a subband that is not used to perform information transmission with another subband spaced from the operating subbands of the second UE.

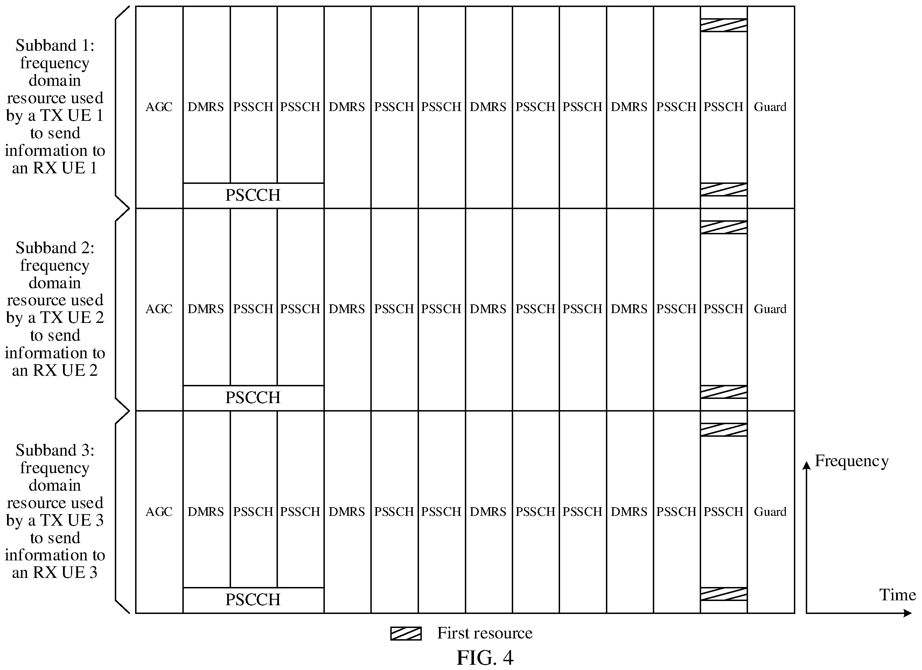

FIG. 4 is a diagram of the first resource. A subband 1 in FIG. 4 is, for example, an operating subband of an RX UE 1, and a TX UE 1 sends information to the RX UE 1 on the subband 1. A subband 2 is, for example, an operating subband of an RX UE 2, and a TX UE 2 sends information to the RX UE 2 on the subband 2. A subband 3 is, for example, an operating subband of an RX UE 3, and a TX UE 3 sends information to the RX UE 3 on the subband 3. In FIG. 4, a low frequency location is used as a frequency domain start location of a subband. For the subband 1, the subband 2 is an adjacent subband at a frequency domain start location of the subband 1, and a frequency domain end location of the subband 1 may further be an adjacent subband, which is not shown in FIG. 4. For the subband 2, the subband 1 is an adjacent subband at a frequency domain end location of the subband 2, and the subband 3 is an adjacent subband at a frequency domain start location of the subband 2. For the subband 3, the subband 2 is an adjacent subband at a frequency domain end location of the subband 3. In addition, there may be an adjacent subband at a frequency domain start location of the subband 3, which is not shown in FIG. 4. In FIG. 4, a box marked with slashes indicates the first resource. It may be learned that first resources configured for three RX UEs each include two sub-resources, and the two sub-resources respectively correspond to two adjacent subbands of corresponding RX UEs. For example, for the subband 2, two sub-resources configured for the subband 2 are respectively referred to as a CSI-IM resource 1 and a CSI-IM resource 2, where the CSI-IM resource 1 is closer to the frequency domain end location of the subband 2, and the CSI-IM resource 1 is closer to the frequency domain start location of the subband 2. Therefore, the RX UE 2 may measure, on the CSI-IM resource 1, an adjacent-channel interference power leaked to the subband 2 when the TX UE 1 sends information on the subband 1, and may also measure, on the CSI-IM resource 2, an adjacent-channel interference power leaked to the subband 2 when the TX UE 3 sends information on the subband 3.

In FIG. 4, an automatic gain control (auto gain control, AGC), a PSCCH, a DMRS and a PSSCH may be sent in a slot, and a last symbol in the slot may alternatively be used as a guard (guard) symbol. The first resource is carried on the PSSCH, and the first resource is located on a last symbol of non-guard symbols in time domain. It should be noted that a time-frequency domain location of the first resource in FIG. 4 is merely an example, and the first resource may be further set at another location in the slot. For example, the first resource may alternatively be carried on the PSCCH.

For the RX UE 1 to the RX UE 3 in FIG. 4, some RX UEs can perform operations on a plurality of subbands, that is, have a plurality of operating subbands. In this case, for some or all of the plurality of operating subbands, the access network device or a corresponding TX UE (for example, a transmitting end of an RX UE) may configure a resource for the operating subbands to measure adjacent subbands. FIG. 4 uses only one of the operating subbands as an example.

In addition, it should be noted that, in FIG. 4, an example in which first resources configured for the subband 1 to the subband 3 have a same time domain location and a same relative frequency domain location is used. For first resources configured for different UEs, corresponding time domain locations and/or frequency domain relative locations may be the same or may be different. If one UE has a plurality of operating subbands, for first resources configured for the different operating subbands of the UE, corresponding time domain locations and/or frequency domain relative locations may be the same or may be different. The relative frequency domain location of the first resource is, for example, an offset between the first resource and a frequency domain start location and/or a frequency domain start location that are/is of a subband.

Alternatively, if the first resource may be predefined according to a protocol or preconfigured in the UE, S301 does not need to be performed. Therefore, S301 is an optional step.

S302: The TX UE sends first power information. Correspondingly, the second UE receives the first power information from the TX UE. For example, the TX UE sends sidelink information in a slot (slot) in which the first resource is located, and the first power information may indicate a transmit power corresponding to the sidelink information at a time domain location of the first resource. It may be understood as that the TX UE sends the sidelink information in the slot in which the first resource is located, and the sidelink information may occupy an entire slot in time domain. In this case, a time domain location of the sidelink information includes the time domain location of the first resource. However, in different time domain symbols in the slot, the transmit power of the sidelink information may be the same or may be different. The first power information indicates the transmit power of the sidelink information at the time domain location of the first resource.

Optionally, the first power information may be included in the sidelink information. A time domain location of the first power information may be located before the time domain location of the first resource. For example, in FIG. 4, the first power information may be included in sidelink control information (sidelink control information, SCI), the SCI may be carried on a PSCCH, and the first resource is located on a PSSCH before the guard symbol. Alternatively, a time domain location of the first power information may be included in the time domain location of the first resource. For example, the first power information is alternatively carried on the PSSCH in which the first resource is located. Alternatively, the first resource may be located at another time domain location in the slot, and a time domain location of the first power information may be located after the time domain location of the first resource.

For example, the first power information is sent in a broadcast manner, and a plurality of UEs may receive the first power information. In S302, that the second UE receives the first power information is used as an example. In addition, there may be a plurality of UEs that are to send sidelink information, that is, there may be a plurality of TX UEs, and all the plurality of TX UEs may send corresponding power information. It is assumed that a fourth UE is also a TX UE, the third UE and the fourth UE are both transmitting ends of corresponding RX UEs, and both the two TX UEs need to send information to the corresponding RX UEs. In this case, both the third UE and the fourth UE send power information. Power information sent by one TX UE may indicate a transmit power that is of sidelink information sent by the TX UE in the slot in which the first resource is located and that is at the time domain location of the first resource. For example, power information sent by the third UE may indicate a transmit power that is of sidelink information sent by the third UE in the slot in which the first resource is located and that is at the time domain location of the first resource, and power information sent by the fourth UE may indicate a transmit power that is of sidelink information sent by the fourth UE in the slot in which the first resource is located and that is at the time domain location of the first resource.

For example, S302 is considered to be performed by the third UE and/or the fourth UE (in FIG. 3, the third UE is used as an example), and sidelink information sent by the third UE and/or the fourth UE is collectively referred to as first sidelink information (or it is understood as that if the third UE sends the sidelink information, and the fourth UE does not send the sidelink information, the first sidelink information is the sidelink information sent by the third UE in the slot in which the first resource is located; if the fourth UE sends the sidelink information, and the third UE does not send the sidelink information, the first sidelink information is the sidelink information sent by the fourth UE in the slot in which the first resource is located; or if both the third UE and the fourth UE send the sidelink information, the first sidelink information includes sidelink information 1 and sidelink information 2, where the sidelink information 1 is the sidelink information sent by the third UE in the slot in which the first resource is located, and the sidelink information 2 is the sidelink information sent by the fourth UE in the slot in which the first resource is located). In this case, the first power information may indicate a transmit power at the time domain location corresponding to the first resource. If the first sidelink information includes the sidelink information 1 and the sidelink information 2, the first power information may also be considered as including power information 1 and power information 2. The power information 1 is sent by the third UE, and indicates a transmit power of the sidelink information 1 corresponding to the time domain location of the first resource. The power information 2 is sent by the fourth UE, and indicates a transmit power of the sidelink information 2 corresponding to the time domain location of the first resource. Transmit powers indicated by the two pieces of power information may be equal or unequal.

It should be noted that a receiving end of the first sidelink information may be the second UE, or may be an RX UE other than the second UE.

Manners of sending power information by different TX UEs, content indicated by the power information, and the like are similar. Therefore, in S302, that the third UE and/or the fourth UE send/sends the first power information is used as an example. It may be determined that the second UE may receive power information from one or more TX UEs, for example, may receive power information other than the first power information.

Alternatively, the second UE may determine, in another manner, a power used by the TX UE to send the sidelink information on the first resource. In this case, S302 does not need to be performed. Therefore, S302 is an optional step.

S303: The second UE determines first interference information.

The first interference information is, for example, adjacent-channel interference information, and may indicate adjacent-channel interference generated, for information receiving by the second UE, when another UE sends information. When the second UE receives information on the operating subband, if the another UE sends the information on the adjacent subband of the operating subband, the adjacent-channel interference may be generated for the second UE, and the second UE may determine the adjacent-channel interference information. In some scenarios, there may be a plurality of RX UEs, and one or more RX UEs may all receive adjacent-channel interference. For example, in FIG. 2A, when the TX UE 3 sends sidelink information to the RX UE 3 on the subband 3, adjacent-channel interference may be generated for receiving by the RX UE 1, and when the TX UE 2 sends sidelink information to the RX UE 2 on the subband 2, adjacent-channel interference may also be generated for receiving by the RX UE 3. In this embodiment of this application, the adjacent-channel interference information may be determined for some or all RX UEs subject to the adjacent-channel interference. Because manners of determining the adjacent-channel interference information by different RX UEs are similar, an example in which the second UE determines the adjacent-channel interference information is used in S303.

The second UE may obtain the first interference information by performing measurement on the first resource. A TX UE may send SCI before sending sidelink information, or based on the foregoing understanding, information sent by the UE in a slot is understood as one piece of sidelink information. In this case, the sidelink information sent by the TX UE may include the SCI, and the SCI is, for example, carried on the PSCCH. The SCI may include scheduling information of the PSSCH and/or the PSCCH in the sidelink information. The scheduling information includes, for example, time-/frequency location information of the PSSCH and/or the PSCCH. The frequency domain location information of the PSSCH and/or the PSCCH may indicate a subband that includes the PSSCH and/or the PSCCH. For example, if the sidelink information is sent in a broadcast or multicast manner, the plurality of RX UEs may receive the sidelink information. Different TX UEs may send sidelink information in the broadcast or multicast manner. Therefore, the second UE may receive the sidelink information from the plurality of TX UEs, to obtain SCI of the plurality of TX UEs.

The second UE may determine, based on the received SCI, a subband used by each TX UE to send the sidelink information. If there is an adjacent subband of the operating subband of the second UE in frequency domain in these subbands, the second UE may measure the adjacent subband on the first resource. In addition, if there is the subband A in these subbands, and although there is another subband between the subband A and the operating subband of the second UE, no information transmission is performed on the another subband, the second UE may alternatively measure the subband A on the first resource. If none of the SCI received by the second UE includes information about the another subband, it indicates that transmission of none of PSSCHs and/or PSCCHs scheduled by the SCI is performed on the another subband, and the second UE may determine that no information transmission is performed on the another subband. Alternatively, if the second UE fails to decode the SCI on the another subband, the second UE may also determine that no information transmission is performed on the another subband.

For example, if the third UE and/or the fourth UE send/sends the first sidelink information, the second UE may receive the first sidelink information, and obtain SCI of the third UE and/or the fourth UE from the first sidelink information. The second UE may determine, based on SCI from the third UE, a subband on which the sidelink information 1 sent by the third UE is located, and may determine, based on SCI from the fourth UE, a subband on which the sidelink information 2 sent by the fourth UE is located. For example, if the first sidelink information is located on a first subband (if the first sidelink information includes the sidelink information 1 and the sidelink information 2, the first subband is considered as the subband 1 that carries the sidelink information 1 and the subband 2 that carries the sidelink information 2, and the subband 1 and the subband 2 may be a same subband or may be different subbands), the second UE may measure the first subband on the first resource. In other words, the second UE may measure the first sidelink information from the first subband on the first resource, to obtain a power, where the power is a power leaked, when sidelink information on an adjacent channel is sent, to the operating subband on which the first resource is located, and is considered as interference to the second UE. Therefore, the power may be referred to as an adjacent-channel interference power. The adjacent-channel interference power may be indicated by, for example, a reference signal received power (reference signal received power, RSRP) or a received signal strength indication (received signal strength indication, RSSI), or may be indicated in another form.

In still another possible implementation, the second UE may measure a receive power on the subband 1, where the subband 1 is a subband including the sidelink information 1 from the third UE. The second UE may determine, based on an in-band emission (in-band emission, IBE) mask and the receive power measured on the subband 1, an adjacent-channel interference power generated by sending by the third UE for receiving by the second UE. For example, the second UE may measure a DMRS from the third UE on the subband 1, to obtain the receive power, and the second UE may input the receive power into the in-band emission mask to determine the adjacent-channel interference power generated by the sending by the third UE for the receiving by the second UE.

Optionally, the in-band emission mask may describe a ratio of an average output power of PRBs in transmit bandwidth occupied by the UE to an average output power of PRBs outside the transmit bandwidth. In some examples, the in-band emission mask may be preconfigured, for example, preconfigured in the UE when the UE is delivered from a factory. Alternatively, the in-band emission mask may be configured by the UE or configured by a network device. Alternatively, the in-band emission mask may be predefined according to a protocol.

After obtaining the adjacent-channel interference power, the second UE may determine the first interference information. For example, the first interference information includes the adjacent-channel interference power. Alternatively, it is understood as that the first interference information includes information about the adjacent-channel interference power. Alternatively, the first interference information may include an adjacent-channel interference coefficient, and the adjacent-channel interference coefficient may be determined based on a transmit power of the first sidelink information and the adjacent-channel interference power. If the first sidelink information includes the sidelink information 1 and the sidelink information 2, the adjacent-channel interference coefficient is considered as including an adjacent-channel interference coefficient 1 and an adjacent-channel interference coefficient 2. In addition, the adjacent-channel interference power also includes an adjacent-channel interference power 1 and an adjacent-channel interference power 2. The adjacent-channel interference power 1 is obtained by the second UE by measuring the sidelink information 1 from the subband 1 on the first resource, and the adjacent-channel interference power 2 is obtained by the second UE by measuring the sidelink information 2 from the subband 2 on the first resource. In this case, the adjacent-channel interference coefficient 1 may be determined based on a transmit power of the sidelink information 1 and the adjacent-channel interference power 1, and the adjacent-channel interference coefficient 2 may be determined based on a transmit power of the sidelink information 2 and the adjacent-channel interference power 2.

For example, an adjacent-channel interference coefficient generated by a TX UE i for an RX UE i may satisfy the following relationship:

$$g_{ij} \; = \; rxPower \; j \; - \; txPower \; i \; [\text{dB}] \; (\text{formula 2})$$

$g_{ij}$ indicates the adjacent-channel interference coefficient generated by the TX UE *i* for the X UE *j. rxPower j* indicates an adjacent-channel interference power measured by the RX UE *j. txPower i* indicates a power of the TX UE *i* to send sidelink information. dB indicates a decibel (decibel).

For example, for the adjacent-channel interference coefficient 1, an example in which a number of the third UE is 2 and a number of the second UE is 1 is used. $g_{21}$ = *rxPower* 1 - *txPower* 2 [dB] may be obtained according to the formula 2.

In addition to the formula 2, the adjacent-channel interference coefficient may alternatively be determined in another manner. For example, the adjacent-channel interference coefficient may alternatively be a product, a sum, and/or the like of a constant and a difference between the adjacent-channel interference power and a transmit power of the sidelink information. A specific manner is not limited.

Optionally, if the adjacent-channel interference information in the first reporting information is the information about the adjacent-channel interference power, a first UE may determine the adjacent-channel interference coefficient in a manner (for example, the formula 2) similar to that of the second UE.

If the second UE determines that there is another TX UE that sends sidelink information on the adjacent subband of the operating subband of the second UE, the second UE may alternatively perform measurement on the first resource to obtain a corresponding adjacent-channel interference power. Implementation processes are similar. Details are not described again. In this case, if the second UE obtains a plurality of adjacent-channel interference powers, the first interference information may include the plurality of adjacent-channel interference powers, or include a plurality of adjacent-channel interference coefficients corresponding to the plurality of adjacent-channel interference powers.

The scenario in FIG. 2A is used as an example. When the TX UE 1 sends sidelink information to the RX UE 1, self-interference may be generated for receiving by the RX UE 2. For example, if the second UE is the RX UE 2 in FIG. 2A, in addition to the adjacent-channel interference power, the second UE may further obtain a self-interference power by performing measurement on the first resource. Therefore, if the second UE determines that a subband (for example, referred to as a second subband) on which the second UE sends sidelink information and a subband on which the second UE receives information is an adjacent subband (for a concept of the adjacent subband, refer to the foregoing descriptions). In this case, optionally, this embodiment of this application may further include S304: The second UE determines second interference information. The second interference information may indicate self-interference generated, for the information receiving by the second UE, when the second UE sends the sidelink information. For example, the sidelink information sent by the second UE is referred to as second sidelink information. The second UE may obtain the second interference information by performing the measurement on the first resource. The second UE may measure the second subband on the first resource, in other words, the second UE may measure the second sidelink information from the second subband on the first resource, to obtain a power. The power is from the second UE and is considered as interference to the second UE. In this case, the power may be referred to as the self-interference power. The self-interference power is indicated by, for example, an RSRP or an RSSI, or may be indicated in another form.

After obtaining the self-interference power, the second UE may determine the second interference information. For example, the second interference information includes the self-interference power. Alternatively, it is understood as that the second interference information includes information about the self-interference power. Alternatively, the second interference information may include a self-interference coefficient, and the self-interference coefficient may be determined based on a transmit power of the second sidelink information and the self-interference power. For example, a self-interference coefficient generated by the TX UE *i* for the RX UE *j* may satisfy the following relationship:

$$s_{ij} \; = \; rxPower \; j \; - \; txPower \; i \; [\text{dB}] \; (\text{formula 3})$$

$s_{ij}$ indicates the self-interference coefficient generated by the TX UE *i* for the RX UE *j. rxPower j* indicates a self-interference power measured by the RX UE *j. txPower i* indicates the power of the TX UE *i* to send the sidelink information.

The TX UE *i* and the RX UE *j* are a same UE.

In addition to the formula 3, the self-interference coefficient may alternatively be determined in another manner. For example, the self-interference coefficient may alternatively be a product, a sum, and/or the like of a constant and a difference between the self-interference power and the transmit power of the sidelink information. A specific manner is not limited.

Optionally, if the self-interference information included in the first reporting information is the information about the self-interference power, the first UE may determine the self-interference coefficient in a manner (for example, the formula 3) similar to that of the second UE.

If the second UE determines that the second UE may further send sidelink information on an adjacent subband of another operating subband of the second UE, the second UE may alternatively perform the measurement on the first resource to obtain a corresponding self-interference power. Implementation processes are similar. Details are not described again. In this case, if the second UE obtains a plurality of self-interference powers, the second interference information may include the plurality of self-interference powers, or include a plurality of self-interference coefficients corresponding to the plurality of self-interference powers.

S305: The second UE sends the first reporting information through a sidelink. Optionally, the first reporting information may be included in the SCI or the PSSCH.

For example, if the second UE may send the first reporting information in a broadcast or multicast manner, a plurality of UEs may receive the first reporting information. In this embodiment of this application, that the first UE receives the first reporting information is used as an example. In addition, in addition to the second UE, another RX UE may also send corresponding reporting information. A sending manner and content included in the reporting information is similar. Therefore, the first UE may receive a plurality of pieces of reporting information. In this embodiment of this application, the first reporting information is used as an example for description. For example, the first UE and the third UE are a same UE, or may be different UEs. For example, the first UE may be a UE dedicated to determining a transmit power for another TX UE, and may be understood as a central UE. It may be understood as that, in this embodiment of this application, each TX UE may determine a transmit power for the TX UE, or the central UE may determine transmit powers for a plurality of TX UEs, and each TX UE does not need to determine the transmit power. The central UE may be a UE that has a management capability and that is in a UE group, a UE determined by negotiation by the plurality of TX UEs and/or the plurality of RX UEs, or a UE determined in another manner. In addition, if the first UE is the central UE, the first UE may be neither a TX UE nor a TX UE. For example, the first UE, the second UE, the third UE, and the fourth UE are different UEs. Alternatively, the first UE may be one of the TX UEs (for example, the first UE and the third UE or the fourth UE are a same UE), and/or the first UE is one of the RX UEs (for example, the first UE and the second UE are a same UE).

The first reporting information may be used to determine a transmit power of one or more TX UEs. The first reporting information may include the first interference information. Optionally, if the second UE further determines the second interference information, the first reporting information may further include the second interference information. Optionally, the first reporting information may further include first path loss information, and the first path loss information may indicate a path loss between the third UE and/or the fourth UE and the second UE. The first path loss information includes, for example, a path loss coefficient, or includes power information. The power information may indicate a receive power obtained by the second UE by performing measurement on a resource other than the first resource. For example, the power information is referred to as loss power information, and the loss power information is, for example, an RSRP or an RSSI. Optionally, the second UE may perform measurement on a second resource. A time domain location of the second resource may be the same as the time domain location of the first resource, but a frequency domain location of the second resource is different from the frequency domain location of the first resource.

For example, for the transmitting end of the second UE, there is a communication transmission path (in other words, a communication link) between the transmitting end and the second UE, and the second UE may obtain the receive power by performing the measurement on the resource other than the first resource. If a plurality of TX UEs are transmitting ends of the second UE, the second UE may separately obtain, by performing measurement on resources other than the first resource, receive powers corresponding to the plurality of TX UEs of the second UE. For example, if the third UE and/or the fourth UE are/is a transmitting end of the second UE, the second UE may measure information from the third UE and/or the fourth UE on the second resource, to determine a receive power. The second UE may use information (that is, loss power information) about the receive power as the first path loss information, or the second UE may determine a path loss coefficient based on loss power information, and use the path loss coefficient as the first path loss information. When calculating a transmit power of a TX UE, the first UE may refer to a path loss between the TX UE and a receiving end of the TX UE. For example, if the third UE is a transmitting end of the second UE, the first UE may refer to a path loss between the third UE and the second UE when calculating the transmit power of the third UE.

The second UE may add the obtained first path loss information to the first reporting information. If the third UE is the transmitting end of the second UE and the fourth UE is not a transmitting end of the second UE, the first path loss information indicates the path loss from the third UE to the second UE. Alternatively, if the fourth UE is a transmitting end of the second UE and the third UE is not the transmitting end of the second UE, the first path loss information indicates a path loss from the fourth UE to the second UE. Alternatively, if both the third UE and the fourth UE are transmitting ends of the second UE, the first path loss information may include path loss information 1 and path loss information 2, where the path loss information 1 indicates path loss information between the third UE and the second UE, and the path loss information 2 indicates path loss information between the fourth UE and the second UE.

For example, both the third UE and the fourth UE are the transmitting ends of the second UE, and the second UE obtains the path loss information 1 through measurement. The second UE may measure sidelink information from the third UE on the second resource, to obtain a receive power, where the receive power includes, for example, an RSRP or an RSSI. The sidelink information is, for example, the sidelink information 1, or may be sidelink information different from the sidelink information 1. The sidelink information may be referred to as third sidelink information. The second UE may determine a path loss coefficient based on the receive power and a transmit power of the third sidelink information, and the path loss coefficient may be used as the path loss information 1. Optionally, the second UE may determine the transmit power of the third sidelink information based on the SCI from the third UE.

For example, the TX UE *i* is a transmitting end of an RX UE *i*, and a coefficient of a path loss between the TX UE *i* and the RX UE *i* may satisfy the following relationship:

$$h_{ii} \ = \ rxPower_i' \ - \ txPower_i' \ [\text{dB}] \ (\text{formula 4})$$

$h_{ii}$ indicates the coefficient of the path loss between the TX UE *i* and the RX UE *i*. $rxPower_i'$ indicates a receive power obtained by the RX UE *i* by performing measurement on the second resource. $txPower_i'$ indicates a power used by the TX UE *i* to send sidelink information. That the second UE determines the coefficient of the path loss between the second UE and the third UE is used as an example. For example, if a number of a communication link between the second UE and the third UE is 1, a number of the corresponding second UE is 1, and a number of the corresponding third UE is 1, $h_{11} \ = \ rxPower_1' \ - \ txPower_1'$ [dB] may be obtained according to the formula 4.

In addition to the formula 4, the second UE may further determine the path loss coefficient in another manner. For example, the path loss coefficient may alternatively be a product, a sum, and/or the like of a constant and a difference between the measured receive power and a transmit power of sidelink information. A specific manner is not limited.

Optionally, if the path loss information included in the first reporting information is the loss power information, the first UE may determine the path loss coefficient in a manner (for example, the formula 4) similar to that of the second UE.

Optionally, the first reporting information may further include a signal to interference plus noise ratio (signal to interference plus noise ratio, SINR) threshold of the second UE, and the SINR threshold is, for example, an expected (expected) SINR of the second UE, or a minimum SINR expected by the second UE.

For example, the first reporting information may include the following information: an identifier of an interference TX UE 1, adjacent-channel interference information 1, and resource reservation information 1; an identifier of an interference TX UE 2, adjacent-channel interference information 2, and resource reservation information 2; an SINR threshold, an identifier of an expected TX UE, path loss information, and resource reservation information 3; .... An interference TX UE is not a transmitting end of the second UE, and is a UE that can generate adjacent-channel interference or self-interference for the second UE. The expected TX UE is a transmitting end of the second UE. For the interference TX UE, the first reporting information may include adjacent-channel interference information and resource reservation information corresponding to the interference TX UE. For the expected TX UE, the first reporting information may include the path loss information and the resource reservation information corresponding to the expected TX UE. The second UE may obtain an identifier of the interference TX UE and the resource reservation information of the interference TX UE from SCI from the interference TX UE. Similarly, the second UE may obtain the identifier of the expected TX UE and the resource reservation information of the expected TX UE from SCI from the expected TX UE. Resource reservation information of one TX UE, for example, including time domain resource reservation information of the TX UE, may indicate a resource reserved by the TX UE in one or more periodicities in time domain.

Alternatively, the first reporting information may not include resource reservation information of each TX UE. For example, a first TX UE may determine the resource reservation information of each TX UE in a sensing (sensing) process.

It can be learned from the foregoing that the first reporting information may include the identifier of the expected TX UE and the identifier of the interference TX UE. Optionally, the second UE may separately add different indication information for the identifier of the expected TX UE and the identifier of the interference TX UE, add an indication for the identifier of the expected TX UE, or add an indication for the identifier of the interference TX UE, to indicate the expected TX UE and the interference TX UE explicitly.

Alternatively, the expected TX UE and the interference TX UE may be implicitly indicated. For example, a first field and a second field are predefined according to a protocol (or pre-specified by the first UE), where the first field is used to carry the identifier of the expected TX UE, and the second field is used to carry the identifier of the interference TX UE. In this case, the expected TX UE and the interference TX UE may be indicated by using different fields.

S306: The first UE determines the transmit power of the third UE based on the first reporting information.

If the first UE receives a plurality of pieces of reporting information (the first reporting information is one of the plurality of pieces of reporting information), the first UE may determine the transmit power of the third UE based on some or all of the plurality of pieces of reporting information. In addition, if the first UE and the third UE are a same UE, the first UE only needs to determine the transmit power of the third UE, and transmit powers of other TX UEs may be determined by the other TX UEs. A determining manner is similar. Alternatively, if the first UE is the central UE, in addition to determining the transmit power of the third UE, the first UE may further determine transmit powers of other TX UEs, but a determining manner is similar. Therefore, a process in which the first UE determines the transmit power of the third UE is used as an example.

The first UE may obtain K pieces of resource reservation information from the received reporting information, where K is greater than or equal to a quantity of pieces of reporting information. For example, the first UE may obtain resource reservation information of the third UE and resource reservation information of the fourth UE from the first reporting information. If the first UE is the central UE, the first UE may determine, based on the K pieces of resource reservation information, TX UEs that send information simultaneously. The first UE may separately determine different slots. For example, for a slot 1, the first UE may determine, based on the K pieces of resource reservation information, a TX UE that sends information in the slot 1; and for a slot 2, the first UE may determine, based on the K pieces of resource reservation information, a TX UE that sends information in the slot 2. For a slot, if the first UE determines, based on the K pieces of resource reservation information, that no TX UE sends information in the slot, the first UE does not need to perform S306 for the slot. For the TX UEs that send the information simultaneously, the first UE may determine transmit powers of the TX UEs based on reporting information related to the TX UEs.

Alternatively, if the first UE is the third UE, the third UE may determine, based on the K pieces of resource reservation information, a TX UE that sends information simultaneously with the third UE. The third UE may separately determine different slots. For example, if the third UE sends information in a slot 1, the third UE may determine, based on the K pieces of resource reservation information, another TX UE that sends information in the slot 1. If the third UE does not send information in the slot 1, the third UE does not need to determine the transmit power of the third UE in the slot 1. In other words, the third UE may not perform S306 for the slot 1. For TX UEs that send information simultaneously with the second UE, the first UE may determine the transmit power of the third UE based on reporting information related to the third UE and the TX UEs.

Reporting information related to one TX UE may include adjacent-channel interference information generated by the TX UE for an RX UE. Optionally, the reporting information further includes one or more of the following: information about self-interference generated by the TX UE for the RX UE, path loss information corresponding to the TX UE, or an SINR threshold of a receiving end of the TX UE.

The following uses an example in which the first UE determines the transmit power of the third UE to describe a method for determining the transmit power. There may be a plurality of manners for determining the transmit power of the third UE. The following describes several manners by using examples.

1. Manner 1:

A transmit power of the TX UE i may satisfy the following relationship:

$$P_i \;=\; \min\bigl(\max\bigl(P_{\min,i}, \boldsymbol{A}_i^{-1}\boldsymbol{b}\bigr), P_{\mathrm{cmax}}\bigr) \; (\text{formula 5})$$

$P_i$ indicates the transmit power of the TX UE $i$. $P_{\min,i}$ indicates a minimum transmit power of the TX UE $i$. If the first UE is the central UE, the first UE may configure $P_{\min,i}$ for the TX UE $i$; or if the first UE is the third UE, the TX UE $i$ may configure $P_{\min,i}$ for the TX UE $i$. For example, if a number of the third UE is 1, the third UE may configure $P_{\min,1}$ for the third UE. $P_{\mathrm{cmax}}$ indicates a maximum output power of the TX UE $i$.

$A$ is a square matrix of $N \times N$, and $N$ indicates a quantity of UE pairs between TX UEs and RX UEs in a same slot. For example, the first UE determines that in the slot 1, a TX UE a, a TX UE b, and a TX UE c send sidelink information simultaneously, and an RX UE a, an RX UE d, and an RX UE e receive the sidelink information. As a subband non-overlapping full-duplex UE, the TX UE a sends and receives sidelink information simultaneously. For example, between the three TX UEs and the three RX UEs, there may be three communication links (or referred to as sidelink communication links) for sidelink information, which are respectively a communication link between the TX UE a and the RX UE d, a communication link between the TX UE b and the RX UE a, and a communication link between the TX UE c and the RX UE e. Correspondingly, there may be three UE pairs: the TX UE a - the RX UE d, the TX UE b - the RX UE a, and the TX UE c - the RX UE e. That is, N = 3. The TX UEs and the RX UEs are numbered based on the communication links. For example, the TX UE a, the TX UE b, and the TX UE c respectively correspond to the TX UE 1, the TX UE 2, and the TX UE 3, and the RX UE d, the RX UE a, and the RX UE e respectively correspond to RX UE 1, RX UE 2, and RX UE 3. There is a sidelink communication link between the TX UE $i$ and the RX UE $i$.

An element $[A]_{ji}$ in a $j^{th}$ row and an $i^{th}$ column of $A$ is $[A]_{ji} = \begin{cases} -c_{ij} \cdot \gamma_{th,j}, & i \neq j \\ h_{ii}, & i = j \end{cases}$. When the TX UE $i$ and the RX UE $j$ are different UEs, $c_{ij} = g_{ij}$; or when the TX UE $i$ and the RX UE $j$ are a same UE, $c_{ij} = s_{ij}$. $\gamma_{th,j}$ is an SINR threshold reported by the RX UE $j$. In the formula 5, $A_i^{-1}$ indicates an $i^{th}$ row of an inverse matrix of $A$. For example, the $j^{th}$ row of $A$ corresponds to the RX UE $j$, and the $i^{th}$ column of A corresponds to the TX UE $i$. In $A$, there is the sidelink communication link between the TX UE $i$ and the RX UE $i$.

If the TX UE $i$ does not send a PSCCH/PSSCH on an adjacent subband of an operating subband of the RX UE $j$, the RX UE $j$ does not send reporting information, or reporting information sent by the RX UE $j$ does not include information about adjacent-channel interference generated by the TX UE $i$ for the RX UE $j$. In this case, $g_{ij} = 0$.

b is a vector of $N \times 1$, and a $j^{th}$ element of b is $[b]_j = \gamma_{th,j} \cdot \sigma_j^2$. $\sigma_j^2$ is a thermal noise power on the operating subband of the RX UE $j$. $\sigma_j^2$ may be sent by the RX UE $j$ to the first UE. For example, the RX UE $j$ may add $\sigma_j^2$ to the first reporting information, or the RX UE $j$ may send $\sigma_j^2$ to the first UE based on other information.

2. Manner 2:

A transmit power of the TX UE i may satisfy the following relationship:

$$P_i = P_i' + c_{\max} \cdot A_i^{-1} b \quad (\text{formula 6})$$

$P_i$ indicates the transmit power of the TX UE $i$ obtained according to the formula 6. $P_i'$ indicates the transmit power of the TX UE $i$ obtained according to the formula 1.

$A$ is a square matrix of $N \times N$, and $N$ indicates a quantity of UE pairs between TX UEs and RX UEs in a same slot. For an explanation of this, refer to the manner 1. An element

$[A]_{ji}$ in a $j^{th}$ row and an $i^{th}$ column of $A$ is $[A]_{ji} = \begin{cases} -c_{ij} \cdot \gamma_j, & i \neq j \\ h_{ii}, & i = j \end{cases}$. When the TX UE $i$ and the RX UE $j$ are different UEs, $c_{ij} = g_{ij}$; or when the TX UE $i$ and the RX UE $j$ are a same UE, $c_{ij} = s_{ij}$. In the formula 6, $A_i^{-1}$ indicates an $i^{th}$ row of an inverse matrix of $A$.

$\gamma_j$ indicates an SINR of the RX UE $j$. For example, $\gamma_j$ satisfies:

$$\gamma_j = \frac{P_j' h_{jj}}{\sigma_j^2 + \Sigma_{j \neq i} P_i' c_{ji}} \quad (\text{formula 7})$$

If the TX UE $i$ does not send a PSCCH/PSSCH on an adjacent subband of an operating subband of the RX UE $j$, the RX UE $j$ does not send reporting information, or reporting information sent by the RX UE $j$ does not include information about adjacent-channel interference generated by the TX UE $i$ for the RX UE $j$. In this case, $g_{ij} = 0$. For descriptions of $\sigma_j^2$, refer to the manner 1.

$b$ is a vector of $N \times 1$. For example, b may be configured by a higher layer. Optionally, an $i^{th}$ element of $b$ is $[b]_i \geq 0$.

Based on $c_{\max}$, it can be ensured that, for any $1 \leq i \leq N, c$ in $0 \leq P_i' + c \cdot A_i^{-1} b \leq P_{\text{cmax}}$ is the maximum.

3. Manner 3: A transmit power of the TX UE $i$ is determined in an iterative process.

(a) The first UE initializes the transmit power of the TX UE $i$ to $P_i^0 = P_{\mathrm{cmax}}$. In addition, the first UE may determine that an SINR of the RX UE $i$ is $\gamma_i^0 = \dfrac{P_i^0 h_{ii}}{\sigma_i^2 + \Sigma_{j \neq i} P_j^0 c_{ij}}$. When the TX UE $i$ and the RX UE $j$ are different UEs, $c_{ij} = g_{ij}$; or when the TX UE $i$ and the RX UE $j$ are a same UE, $c_{ij} = s_{ij}$.

(b) In $t^{th}$ iteration ($t = 1, 2, ...$), the first UE determines a set A and a set B of TX UEs, where the set A is $\mathcal{I}_1^t = \{i | \gamma_i^{t-1} \geq \gamma_{\mathrm{th},i}\}$, the set B is $\mathcal{I}_2^t = \{i | \gamma_i^{t-1} < \gamma_{\mathrm{th},i}\}$, and $\gamma_{\mathrm{th},i}$ is an SINR threshold reported by the RX UE $i$. A quantity of UE pairs between TX UEs and RX UEs in a same slot is N. For this, refer to the descriptions of the manner 1. The set $\mathcal{I}_1^t$ includes $N_1^t \leq N$ TX UEs in total, where an $n^{th}$ TX UE is denoted as a TX UE $i_n$ in $N$ TX UEs.

(c) The first UE updates a transmit power of a TX UE $i$ in the set $\mathcal{I}_2^t$ to $P_i^t = P_i^{t-1}$, and $i \in \mathcal{I}_2^t$. The first UE updates a power of the TX UE $i_n$ in the set $\mathcal{I}_1^t$ to $P_{i_n}^t = (A^t)_n^{-1} b^t$, and $i_n \in \mathcal{I}_1^t$. Based on an updated transmit power $P_i^t$ of the TX UE $i$, the first UE may determine that the SINR of the RX UE $i$ (a receiving end of the TX UE $i$) is $\gamma_i^t = \dfrac{P_i^t h_{ii}}{\sigma_i^2 + \Sigma_{j \neq i} P_j^t c_{ij}}$.

$A^t$ is a square matrix of $N_1^t \times N_1^t$, and an element $[A^t]_{mn}$ in an $m^{th}$ row and an $n^{th}$ column of $A^t$ corresponds to the TX UE $i_n$ and an RX UE $i_m$. $[A^t]_{mn} = \begin{cases} -c_{i_n i_m} \cdot \gamma_{\mathrm{th},i_m}, & m \neq n \\ h_{i_m i_m}, & m = n \end{cases}$. When the TX UE $i_n$ and the RX UE $i_m$ are different UEs, $c_{i_n i_m} = g_{i_n i_m}$; or when the TX UE $i_n$ and the RX UE $i_m$ are a same UE, $c_{i_n i_m} = s_{i_n i_m}$. $(A^t)_m^{-1}$ is an $m^{th}$ row of an inverse matrix of $A^t$.

$b^t$ is a vector of $N_1^t \times 1$, and an $m^{th}$ element of $b^t$ is $[b^t]_m \cdot \gamma_{\mathrm{th},i_m}$. $\left( \sigma_{i_m}^2 + \Sigma_{j \in \mathcal{I}_2^t} P_j^t g_{ji_m} \right)$. $\sigma_{i_m}^2$ is a thermal noise power on an operating subband of the RX UE $i_m$. $\sigma_{i_m}^2$ may be sent by the RX UE $i_m$ to the first UE. For example, the RX UE $i_m$ may add $\sigma_{i_m}^2$ to reporting information, or the RX UE $i_m$ may send $\sigma_{i_m}^2$ to the first UE based on other information.

Step (b) and step (c) are repeatedly performed until the set $\mathcal{I}_1^t$ is a null set. In this case, $t = t_{\max}$. A finally obtained transmit power of TX UE $i$ is $P_i = P_i^{t\max}$.

An inverse matrix (for example, $A_i^{-1}$ or $(A^t)_m^{-1}$) of a matrix is used in the foregoing several manners. By inverting the matrix and then multiplying the inverse matrix by corresponding $b$ (or $b^t$), an SINR of an RX UE can be adjusted, thereby improving an SINR of a UE with poor channel quality, or improving SINRs of RX UEs as a whole.

The foregoing three manners are merely some examples. In addition to the foregoing manners, the first UE may alternatively determine the transmit power of the TX UE based on the first reporting information in another manner.

If the first UE is the third UE, after determining the transmit power of the third UE, the third UE may send information by using the transmit power.

Optionally, if the first UE is the central UE, this embodiment of this application may further include S307: The first UE sends transmit power information, where the transmit power information may indicate the transmit power of the third UE. Optionally, the transmit power information may be carried on a PSSCH. If the first UE is the central UE, the first UE may determine transmit powers of a plurality of TX UEs, and the first UE may separately send corresponding transmit power information to the plurality of TX UEs in a unicast manner. One piece of transmit power information may indicate a transmit power of a receiving end of the transmit power information. For example, if the receiving end of the transmit power information is the third UE, the transmit power information indicates the transmit power of the third UE.

Alternatively, the first UE may send the transmit power information in a broadcast or multicast manner. In this case, the transmit power information may indicate the transmit powers of the plurality of TX UEs. For example, the transmit power information may include the following information: an identifier of the third UE, a resource reservation slot a1, a transmit power a1, a resource reservation slot a2, a transmit power a2, ..., a resource reservation slot aE, and a transmit power aE; an identifier of the fourth UE, a resource reservation slot b1, a transmit power b1, a resource reservation slot b2, a transmit power b2, ..., a resource reservation slot bF, and a transmit power bF; .... It may be understood as that, for the third UE, the first UE separately determines transmit powers in E slots for the third UE, and for the fourth UE, the first UE separately determines transmit powers in F slots for the fourth UE.

Regardless of a manner in which the first UE sends the transmit power information, in FIG. 3, that the third UE receives the transmit power information is used as an example.

If the first UE sends the transmit power information in the broadcast or multicast manner, it is possible that a plurality of UEs can receive the transmit power information. For example, for the third UE, if information needs to be sent in a slot, a transmit power corresponding to the third UE in the slot may be determined from the transmit power information. For example, the transmit power information is shown above. If the third UE needs to send information in the resource reservation slot a1, the third UE may determine that the transmit power a1 should be used for sending.

It should be noted that the transmit power information received by the third UE may not indicate the transmit power of the third UE. For example, the transmit power information does not include the identifier of the third UE, and it indicates that the transmit power of the third UE is not indicated. Alternatively, although the transmit power information indicates the transmit power of the third UE, the transmit power information indicates only transmit powers of the third UE in some slots, and for some other slots in which the third UE may further send information, the transmit power information does not indicate a corresponding transmit power. For example, the transmit power information is shown above. If the third UE needs to send information in a resource reservation slot aE1, the transmit power information does not indicate the transmit power. If either of the foregoing two cases is used, the third UE may determine the transmit power of the third UE in a conventional manner. For example, the third UE may determine the transmit power according to the formula 1.

In this embodiment of this application, when the transmit power of the TX UE is determined, adjacent-channel interference and/or self-interference to the RX UE may be considered, to reduce interference generated by the TX UE for another RX UE when the TX UE sends information. In this way, the determined transmit power of the TX UE is more accurate, and is more consistent with a current actual situation. This helps improve a receiving success rate. For example, by considering the adjacent-channel interference and/or the self-interference, the transmit power of the TX UE may be appropriately reduced. This helps reduce interference to RX UEs, and for these RX UEs, SINRs can also be improved.

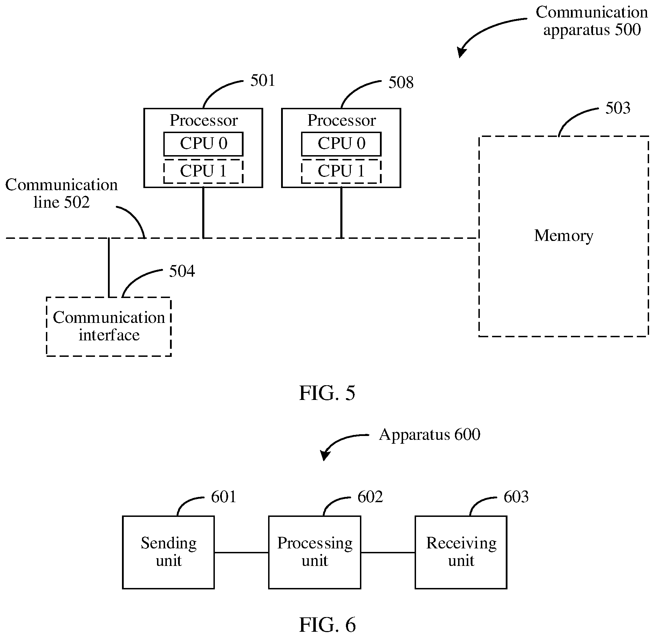

FIG. 5 is a diagram of a structure of a communication apparatus according to an embodiment of this application. The communication apparatus 500 may be the first terminal device in the embodiment shown in FIG. 3 or a circuit system of the first terminal device, and is configured to implement the method corresponding to the first terminal device in the foregoing method embodiments. Alternatively, the communication apparatus 500 may be the second terminal device in the embodiment shown in FIG. 3 or a circuit system of the second terminal device, and is configured to implement the method corresponding to the second terminal device in the foregoing method embodiments. For a specific function, refer to the descriptions in the foregoing method embodiments. For example, the circuit system is a chip system.

The communication apparatus 500 includes at least one processor 501. The processor 501 may be configured for internal processing of the apparatus, to implement a specific control processing function. Optionally, the processor 501 includes instructions. Optionally, the processor 501 may store data. Optionally, different processors may be independent components, may be located in different physical locations, or may be located on different integrated circuits. Optionally, different processors may be integrated into one or more processors, for example, integrated into one or more integrated circuits.

Optionally, the communication apparatus 500 includes one or more memories 503, configured to store the instructions. Optionally, the memory 503 may further store data. The processor and the memory may be separately disposed, or may be integrated together.

Optionally, the communication apparatus 500 includes a communication line 502 and at least one communication interface 504. Because the memory 503, the communication line 502, and the communication interface 504 are all optional, the memory 503, the communication line 502, and the communication interface 504 are all represented by dashed lines in FIG. 5.

Optionally, the communication apparatus 500 may further include a transceiver and/or an antenna. The transceiver may be configured to send information to or receive information from another apparatus. The transceiver may be referred to as a transceiver machine, a transceiver circuit, an input/output interface, or the like, and is configured to implement a transceiver function of the communication apparatus 500 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 501 may include a general central processing unit (central processing unit, CPU), a microprocessor, an application-specific integrated circuit (application-specific integrated circuit, ASIC), or one or more integrated circuits configured to control program execution of the solutions of this application.

The communication line 502 may include a path for performing transmission of information between the foregoing components.

The communication interface 504 uses any apparatus like a transceiver, and is configured to communicate with another device or a communication network, such as an Ethernet, a radio access network (radio access network, RAN), a wireless local area network (wireless local area network, WLAN), or a wired access network.

The memory 503 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Bluray disc, and the like), a magnetic disk storage medium, another magnetic storage device, or any other medium that can carry or store expected program code in a form of an instruction or a data structure and that can be accessed by a computer. However, the memory 503 is not limited thereto. The memory 503 may exist independently, and is connected to the processor 501 through the communication line 502. The memory 503 may alternatively be integrated with the processor 501.

The memory 503 is configured to store computer-executable instructions for performing the solutions of this application, and the processor 501 controls execution of the computer-executable instructions. The processor 501 is configured to execute the computer-executable instructions stored in the memory 503, to implement the method provided in embodiments of this application.

Optionally, the computer-executable instructions in this embodiment of this application may also be referred to as application program code. This is not specifically limited in this embodiment of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 508 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 5 is a chip, for example, a chip of the first terminal device or a chip of the second terminal device, the chip includes the processor 501 (and may further include the processor 508), the communication line 502, the memory 503, and the communication interface 504. Specifically, the communication interface 504 may be an input interface, a pin, a circuit, or the like. The memory 503 may be a register, a cache, or the like. The processor 501 and the processor 508 each may be a general-purpose CPU, a microprocessor, an ASIC, or one or more integrated circuits for controlling program execution for the power determining method in any one of the foregoing embodiments.

In embodiments of this application, the apparatus may be divided into functional modules based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when each functional module is obtained through division based on each corresponding function, FIG. 6 is a diagram of an apparatus. The apparatus 600 may be the first terminal device or the second terminal device in the foregoing method embodiments, or a chip in the first terminal device or a chip in the second terminal device. The apparatus 600 includes a sending unit 601, a processing unit 602, and a receiving unit 603.

It should be understood that the apparatus 600 may be configured to implement the steps performed by the first terminal device or the second terminal device in the method in embodiments of this application. For related features, refer to the foregoing embodiments. Details are not described herein again.

Optionally, functions/implementation processes of the sending unit 601, the receiving unit 603, and the processing unit 602 in FIG. 6 may be implemented by the processor 501 in FIG. 5 by invoking computer-executable instructions stored in the memory 503. Alternatively, a function/an implementation process of the processing unit 602 in FIG. 6 may be implemented by the processor 501 in FIG. 5 by invoking the computer-executable instructions stored in the memory 503, and functions/implementation processes of the sending unit 601 and the receiving unit 603 in FIG. 6 may be implemented through the communication interface 504 in FIG. 5.

Optionally, when the apparatus 600 is a chip or a circuit, functions/implementation processes of the sending unit 601 and the receiving unit 603 may alternatively be implemented through a pin, a circuit, or the like.

This application further provides a computer-readable storage medium. The computer-readable storage medium stores a computer program or instructions. When the computer program or the instructions are run, the method performed by the first terminal device or the second terminal device in the foregoing method embodiments is implemented. In this way, the function in the foregoing embodiments may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first terminal device or the second terminal device in any one of the foregoing method embodiments.

An embodiment of this application further provides a processing apparatus, including a processor and an interface. The processor is configured to perform the method performed by the first terminal device or the second terminal device in any one of the foregoing method embodiments.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, procedures or functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or a storage medium in any other form in the art. For example, the storage medium may be connected to the processor, so that the processor may read information from the storage medium and write information into the storage medium. Optionally, the storage medium may alternatively be integrated into the processor. The processor and the storage media may be disposed in an ASIC, and the ASIC may be disposed in a terminal device. Optionally, the processor and the storage medium may alternatively be disposed in different components in the terminal device.

These computer program instructions may alternatively be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. It is clear that a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

**Claims**

1. A power determining method, applied to a first terminal device, wherein the method comprises:

   receiving first reporting information from a second terminal device through a sidelink, wherein the first reporting information comprises first interference information, and the first interference information indicates adjacent-channel interference generated, for information receiving by the second terminal device, when a third terminal device and/or a fourth terminal device send/sends first sidelink information; and
   determining a transmit power of the third terminal device based on the first reporting information.

2. The method according to claim 1, wherein the method further comprises:
   determining a transmit power of the fourth terminal device based on the first reporting information.

3. The method according to claim 1 or 2, wherein the first interference information comprises an adjacent-channel interference power or an adjacent-channel interference coefficient generated, for the information receiving by the second terminal device, when the third terminal device and/or the fourth terminal device send/sends the first sidelink information, wherein the adjacent-channel interference coefficient is determined based on a transmit power of the first sidelink information and the adjacent-channel interference power.

4. The method according to any one of claims 1 to 3, wherein the first sidelink information comprises transmit power information of the first sidelink information.

5. The method according to any one of claims 1 to 4, wherein the method further comprises:
   determining, based on first resource reservation information, that the third terminal device and the fourth terminal device send information simultaneously, wherein the first resource reservation information comprises resource reservation information of the third terminal device and resource reservation information of the fourth terminal device.

6. The method according to any one of claims 1 to 5, wherein the first reporting information further comprises second interference information, and the second interference information indicates self-interference generated for the second terminal device when the second terminal device sends second sidelink information.

7. The method according to claim 6, wherein the second interference information comprises a self-interference power or a self-interference coefficient generated, for the information receiving by the second terminal device, when the second terminal device sends the second sidelink information, wherein the self-interference coefficient is determined based on a transmit power of the second sidelink information and the self-interference power.

8. The method according to any one of claims 1 to 7, wherein the first reporting information further comprises first path loss information, and the first path loss information indicates a path loss between the third terminal device and the second terminal device, wherein the transmit power of the third terminal device is used to send information to the second terminal device.

9. The method according to any one of claims 1 to 8, wherein the first reporting information further comprises a signal to interference plus noise ratio SINR threshold of the second terminal device.

10. The method according to any one of claims 1 to 9, wherein the method further comprises: sending transmit power information of the third terminal device to the third terminal device.

11. The method according to any one of claims 1 to 10, wherein

    the first terminal device and one of the second terminal device, the third terminal device, or the fourth terminal device are a same terminal device; or

the first terminal device, the second terminal device, the third terminal device, and the fourth terminal device are different devices.

12. A power determining method, applied to a second terminal device, wherein the method comprises:

determining first interference information, wherein the first interference information indicates adjacent-channel interference generated, for information receiving by the second terminal device, when a third terminal device and/or a fourth terminal device send/sends first sidelink information; and

sending first reporting information through a sidelink, wherein the first reporting information comprises the first interference information, and the first reporting information is used to determine a transmit power of one or more sending devices.

13. The method according to claim 12, wherein the first interference information comprises an adjacent-channel interference power or an adjacent-channel interference coefficient generated, for the information receiving by the second terminal device, when the third terminal device and/or the fourth terminal device send/sends the first sidelink information, wherein the adjacent-channel interference coefficient is determined based on a transmit power of the first sidelink information and the adjacent-channel interference power.

14. The method according to claim 13, wherein the method further comprises:
measuring the first sidelink information from a first subband on a first resource, to obtain the adjacent-channel interference power, wherein the first subband is a subband on which the third terminal device and/or the fourth terminal device send/sends the first sidelink information.

15. The method according to claim 14, wherein the first subband comprises an adjacent subband of an operating subband of the second terminal device, and/or comprises a subband that is not used to perform information transmission with an operating subband of the second terminal device.

16. The method according to any one of claims 13 to 15, wherein the first sidelink information comprises transmit power information of the first sidelink information.

17. The method according to any one of claims 12 to 16, wherein the first reporting information further comprises second interference information, and the second interference information indicates self-interference generated, for the information receiving by the second terminal device, when the second terminal device sends second sidelink information.

18. The method according to claim 17, wherein the second interference information comprises a self-interference power or a self-interference coefficient generated, for the information receiving by the second terminal device, when the second terminal device sends the second sidelink information, wherein the self-interference coefficient is determined based on a transmit power of the second sidelink information and the self-interference power.

19. The method according to claim 18, wherein the method further comprises:
measuring the second sidelink information from a second subband on the first resource, to obtain the self-interference power, wherein the second subband is a subband on which the second terminal device sends the second sidelink information.

20. The method according to claim 19, wherein the second subband comprises an adjacent subband of the operating subband of the second terminal device, and/or comprises a subband that is not used to perform information transmission with the operating subband of the second terminal device.

21. The method according to claim 14 or 19, wherein the method further comprises:
receiving configuration information, wherein the configuration information is used to configure the first resource, and the first resource is used to measure interference from another subband to the operating subband of the second terminal device.

22. The method according to any one of claims 12 to 21, wherein the first reporting information further comprises first path loss information, and the first path loss information indicates a path loss between the third terminal device and the second terminal device, wherein a transmit power of the third terminal device is used to send information to the second terminal device.

23. The method according to any one of claims 12 to 22, wherein the first reporting information further comprises a signal to interference plus noise ratio SINR threshold of the second terminal device.

24. A communication device, comprising:

one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 11.

25. A communication device, comprising:

one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 12 to 23.

26. A computer-readable storage medium, wherein the computer-readable storage medium is configured to store a computer program; and when the computer program is run on a computer, the computer is enabled to perform the method according to any one of claims 1 to 11, or the computer is enabled to perform the method according to any one of claims 12 to 23.

27. A chip, comprising one or more processors and a communication interface, wherein the one or more processors are configured to read instructions to perform the method according to any one of claims 1 to 11 or the method according to any one of claims 12 to 23.

100

Frequency

112

114

122

124

Time

FIG. 1

TX UE 3 → RX UE 3

TX UE 2 → TX UE 1 / RX UE 2

RX UE 1

Frequency

Subband 3

Subband 2

Subband 1

Time

- - - → Adjacent-channel interference link or self-interference link

⇒ Expected link

FIG. 2A

FIG. 2B

FIG. 3

FIG. 4

Communication
apparatus 500

```
        ┌─ 501           ┌─ 508                        ┌─ 503
 ┌──────────────┐  ┌──────────────┐        ┌───────────────────┐
 │  Processor   │  │  Processor   │        │                   │
 │ ┌──────────┐ │  │ ┌──────────┐ │        │                   │
 │ │  CPU 0   │ │  │ │  CPU 0   │ │        │                   │
 │ └──────────┘ │  │ └──────────┘ │        │                   │
 │ ┌──────────┐ │  │ ┌──────────┐ │        │                   │
 │ │  CPU 1   │ │  │ │  CPU 1   │ │        │     Memory        │
 │ └──────────┘ │  │ └──────────┘ │        │                   │
 └──────────────┘  └──────────────┘        │                   │
```

Communication
line 502

┌─ 504
Communication
interface

FIG. 5

Apparatus 600

```
   ┌─ 601            ┌─ 602            ┌─ 603
 ┌──────────┐   ┌──────────┐   ┌──────────┐
 │ Sending  │   │Processing│   │Receiving │
 │  unit    │   │  unit    │   │  unit    │
 └──────────┘   └──────────┘   └──────────┘
```

FIG. 6

## INTERNATIONAL SEARCH REPORT

| International application No. |
|---|
| **PCT/CN2022/137962** |

**A.    CLASSIFICATION OF SUBJECT MATTER**

H04W 4/70(2018.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 功率, 侧行, 链路, 干扰, 信号, 邻频, SL, sidelink, D2D, power, link, interference, signal, neighbor, frequency

**C.    DOCUMENTS CONSIDERED TO BE RELEVANT**

| Category* | Citation of document, with indication, where appropriate, of the relevant passages | Relevant to claim No. |
|---|---|---|
| Y | WO 2021026715 A1 (GUANGDONG OPPO MOBILE TELECOMMUNICATIONS CORP., LTD.) 18 February 2021 (2021-02-18) <br> description, page 4, line 3-page 5, line 37, and figure 3 | 1-27 |
| Y | CN 113875270 A (QUALCOMM INC.) 31 December 2021 (2021-12-31) <br> description, paragraphs 61-98, and figure 1 | 1-27 |
| A | CN 111148205 A (HUAWEI TECHNOLOGIES CO., LTD.) 12 May 2020 (2020-05-12) <br> entire document | 1-27 |
| A | US 2021167916 A1 (SHANGHAI LANGBO COMMUNICATION TECHNOLOGY CO., LTD.) 03 June 2021 (2021-06-03) <br> entire document | 1-27 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 February 2023** | **02 March 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/137962**

| Patent document cited in search report | | | Publication date (day/month/year) | Patent family member(s) | | | Publication date (day/month/year) |
|---|---|---|---|---|---|---|---|
| WO | 2021026715 | A1 | 18 February 2021 | US | 2022110074 | A1 | 07 April 2022 |
| CN | 113875270 | A | 31 December 2021 | EP | 3977802 | A1 | 06 April 2022 |
| | | | | US | 2020383130 | A1 | 03 December 2020 |
| | | | | WO | 2020243141 | A1 | 03 December 2020 |
| CN | 111148205 | A | 12 May 2020 | WO | 2020088366 | A1 | 07 May 2020 |
| US | 2021167916 | A1 | 03 June 2021 | None | | | |

Form PCT/ISA/210 (patent family annex) (July 2022)

**EP 4 468 756 A1**

**Patent documents cited in the description**

- CN 202210122306
- CN 202210268005